# EUROPEAN PATENT SPECIFICATION

(11) **EP 4 320 030 B1**
(45) Date of publication and mention of the grant of the patent: **26.08.2026**
(21) Application number: 22717101.4
(22) Date of filing: 21.03.2022
(51) Int. Cl.: B62D 25/14, B60R 21/04, B62D 29/04, B60R 21/045

(54) **CROSS CAR BEAM FOR A VEHICLE**
QUERTRÄGER EINES FAHRZEUGES
POUTRE TRANSVERSALE POUR VÉHICULE

(30) Priority: 07.04.2021 GB 202104929
(43) Date of publication of application: 14.02.2024
(73) Proprietor: Lisa Dräxlmaier GmbH, 84137 Vilsbiburg (DE)
(72) Inventor: ADAM, Istvan, 1223 Budapest (HU); BABA, Wolfgang, 84036 Landshut (DE)
(86) International application number: PCT/EP2022/057286
(87) International publication number: WO 2022/214300

(56) References cited:
- EP-A1- 3 741 537
- DE-B3- 102006 051 948
- US-A1- 2004 056 463
- US-A1- 2011 285 174

## Description

### TECHNICAL FIELD

The present invention relates to a cross car beam for a vehicle comprising a first main body extending in a longitudinal direction from a first end to a second end.

The present invention is described below mainly in connection with a cross car beam in a motor vehicle. However, the idea can be used in connection with various vehicle sizes and with respect to various integrated components in vehicles.

### BACKGROUND OF THE INVENTION

In the prior art vehicle cockpit cross beams are manufactured out of welded steel, aluminium, die cast magnesium or in combination with polymerized material as hybrid assembly together with metal components. Cross car beams must meet high mechanical strengths why metal components were indispensable. As a consequence vehicle cockpit cross beams comprise a high weight and have to be assembled in further production steps with numerous additional components. So the installation effort and the CO2 usage during production and the use in a vehicle of such cross car beams is very high.

US 2004/0056463 A1 discloses an instrument panel assembly which includes an elongate beam structure and a plurality of thermoplastic energy absorbers coupled to the beam structure. The instrument panel assembly also includes a knee bolster positioned in front of the thermoplastic energy absorbers.

EP 3741 537 A1 and US 2011 / 0285174 A1 both disclose a vehicle crossmember made from fiber-reinforced polymeric material.

In view of the future with the goal of reducing the installation effort and the CO2 usage cross car beams in vehicles must be better adapted to the needs of the occupants. It would therefore be desirable to provide a cross car beam that causes production costs almost equal or less than other conventional cross car beams. Furthermore it would be desirable to provide a cross car beam that integrates submodules and further essential elements into the cross car beam to reduce complexity and number of components.

### SUMMARY OF INVENTION

Taking the above statements as basis, the object of the present invention is that of providing a cross car beam that is manufactured without any types of metal parts. It is a further object of the present invention to reduce the CO2 usage during production and during the use of the cross car beam by reducing the weight and by enabling a system integrated structure.

The object is solved by the subject matter of the independent claim 1. Advantageous developments of the invention are specified in the dependent claims, the description and the accompanying figures.

According to the invention, a cross car beam for a vehicle is proposed comprising a first main body extending in a longitudinal direction from a first end to a second end, at least one deformable crash pad adapted to absorb impact energy, at least one collapsible guiding element placed adjacent to the crash pad, wherein the collapsible guiding element comprises a guiding surface adapted to guide the crash pad during deformation, and the cross car beam is formed integrally by at least one fibre reinforced polymer.

By forming the cross car beam integrally by at least one fibre reinforced polymer the total number of components can be reduced. Nevertheless the cross car beam must be able to absorb the forces that occur. The occurring forces are transferred from the vehicle body to the cross car beam via the fixing points. The place and the number of fixing points are predefined from the body manufacturer. Likewise the occurring forces that will be transferred to the cross car beam and that determine the stiffness of the cross car beam are predefined from the body manufacturer.

This is made possible on the one hand by the substantially u-shaped cross section extending continuously in the longitudinal direction from the first end to the second end. The u-shaped cross-section is easy to produce and has a high degree of rigidity.

On the other hand, this is achieved by the fibres reinforcing the polymer. The fibres comprise glass fibres or carbon fibres whose orientation in the polymer is aligned with the force flow through the cross car beam.

In the event of an accident the at least one deformable crash pad that is adapted to absorb impact energy the impact energy e.g. of a body from the passenger compartment. This reduces the risk of injury to passengers and is therefore an important safety enhancement.

Additionally safety for passengers is increased because the at least one collapsible guiding element is placed adjacent to the crash pad, wherein the collapsible guiding element comprises a guiding surface adapted to guide the crash pad during deformation. Consequently, the crash pad is guided along the guiding surface of the guiding element during deformation. This ensures reliable impact energy absorption. For example, it works even if the impact acts laterally or at least not central on the crash pad.

An u-shaped cross-section can be understood as any cross section that has a suitable stiffness and easy demoulding after injection moulding. For example, the cross-section could also be v-shaped, c-shaped or w-shaped. Furthermore, there is no need for a symmetrical cross-section. The cross-section can also be asymmetrical.

According to a preferred embodiment the cross car beam is made from an injection molded fibre reinforced polymer. The advantage here is that integrally formed cross car beam can be produced completely automatically. The fibres are introduced automatically during the injection moulding process of the cross car beam and are oriented precisely depending on the force flow by means of targeted control of the injection moulding nozzles.

In a preferred embodiment of the present invention, the crash pad comprises a foam core. The foam core is suitable for distributing the force during the deformation of the crash pad. For example, the foam core consists of expanded propylene foam.

According to a preferred embodiment of the invention, the crash pad is covered by a cover element facing to a passenger compartment such that an impact from the passenger compartment on the cover element is transferred to the crash pad.

This has the advantage of providing a flat and regular surface for a passenger in the passenger compartment. For example, the cover element can cover several crash pads, whereby an even distribution of the impact energy on several crash pads is possible even in the case of a punctual impact on the cover element.

Preferably, the collapsible guiding element is covered by a cover element facing to the passenger compartment such that the impact energy from the passenger compartment on the cover element is transferred to the collapsible guiding element.

This also has the advantage of providing a flat and regular surface for a passenger in the passenger compartment. For example, the cover element can cover several guiding elements, whereby an even distribution of the impact energy on several guiding elements is possible even in the case of a punctual impact on the cover element.

Particularly preferably, the cover element covers several crash pads and several guiding elements at the same time. In this way, a cover element can simultaneously transfer impact energy to the crash pads and to the guiding elements.

According to an advantageous further development of the invention the collapsible guiding element comprising a predetermined breaking point. This has the advantage that the deformation of the crash pad can be gradual. Thus, there is an initial deformation of the crash pad before the predetermined breaking point of the guiding element is reached. However, if the impact energy exceeds a critical threshold, the predetermined breaking point comes into effect and the deformation of the crash pad can be continued beyond the initial deformation of the crash pad before the predetermined breaking point.

In a preferred embodiment of the present invention, the collapsible guiding element comprising an impact unit adapted to collapse relative to the collapsible guiding element if an impact energy from the passenger compartment on the cover element is transferred to the impact unit. This allows the collapse of the impact unit to be planned exactly.

Preferably, the impact unit is adapted to collapse into an internal space of the collapsible guiding element.

According to a preferred embodiment of the invention, the predetermined breaking point is placed between the collapsible guiding element and the impact unit. According to a preferred embodiment the predetermined breaking point comprises a reduced cross section.

Thus, on the one hand, the guiding element including the impact unit can be produced in one piece with the cross car beam. On the other hand, the predetermined breaking point can be produced very easily and reliably by means of injection moulding. The reduced cross section can be produced in such a way that there are no reinforcing fibres in this area. This means that the failure of the predetermined breaking point can be precisely adjusted and passenger safety can be increased.

Preferably, the predetermined breaking point extends into a peripheral direction of the guiding element. Thus the collapse of the impact unit after exceeding the determined breaking point into the internal space of the collapsible guiding element can be ensured.

According to an advantageous further development the invention comprises a first collapsible guiding element placed adjacent to the crash pad and a second collapsible guiding element placed adjacent to the crash pad, wherein the first collapsible guiding element is placed at a different side of the crash pad compared to the second collapsible guiding element.

This ensures that the deformation of the crash pad is particularly controlled because the crash pad can be guided from several sides. This increases passenger safety in the event of an accident.

According to a further variant, a cross car beam for a vehicle is proposed comprising a first main body extending in a longitudinal direction from a first end to a second end, the first main body having an at least substantially u-shaped cross section substantially following the longitudinal direction, the cross car beam is formed integrally by at least one fibre reinforced polymer.

By forming the cross car beam integrally by at least one fibre reinforced polymer the total number of components can be reduced. Nevertheless the cross car beam must be able to absorb the forces that occur. The occurring forces are transferred from the vehicle body to the cross car beam via fixing points. The place and the number of fixing points are predefined from the body manufacturer. Likewise the occurring forces that will be transferred to the cross car beam and that determine the stiffness of the cross car beam are predefined from the body manufacturer.

This is made possible on the one hand by the substantially u-shaped cross-section extending continuously in the longitudinal direction from the first end to the second end. The u-shaped cross-section is easy to produce and has a high degree of rigidity.

On the other hand, this is achieved by the fibres reinforcing the polymer. The fibres comprise glass fibres or carbon fibres whose orientation in the polymer is aligned with the force flow through the cross car beam.

According to a preferred embodiment the cross car beam is made from an injection molded fibre reinforced polymer. The advantage here is that integrally formed cross car beam can be produced completely automatically. The fibres are introduced automatically during the injection moulding process of the cross car beam and are oriented precisely depending on the force flow by means of targeted control of the injection moulding nozzles.

In a preferred embodiment of the present invention, the first main body comprises a first opening dividing the first main body into an upper part and a lower part, the upper part and the lower part each having an at least substantially u-shaped cross section. This allows the first main body to be adapted more flexibly to body-specific conditions. For example, ventilation ducts can be routed through the first opening to supply air to the vehicle interior or cables can be routed to connect to an instrument panel or display panel. By forming the upper part and the lower part with a u-shaped cross section, the rigidity of the cross car beam can be maintained despite the first opening.

According to a preferred embodiment of the invention, the u-shaped cross sections each comprising inner ribs reinforcing the first main body. The inner ribs are arranged inside the u-shaped cross section and connect the opposite legs of the u-shaped cross section. To further strengthen the beam the ribs cross over each other. Thus, the stiffness of the cross car beam can be maximised with a low material input.

Preferably, the first main body having an at least substantially u-shaped additional cross section following substantially parallel to the longitudinal direction. This has the technical advantage of additionally increasing the stiffness of the cross car beam. For example, the u-shaped additional cross section can be arranged parallel to the already described u-shaped cross-section and extend completely over the entire length of the main body from the first end to the second end. For example, the additional u-shaped cross-section can also be arranged offset, whereby it still extends in the longitudinal direction and increases the stiffness of the beam.

According to an advantageous further development of the invention the cross car beam comprises a second main body extending from a first end to a second end substantially following the longitudinal direction, the second main body having an at least substantially u-shaped cross section substantially following the longitudinal direction.

This allows for additional stiffening of the cross car beam. The second main body can be easily aligned with the first main body, which aligns the u-shaped cross-sections of both main bodies in the longitudinal direction.

Preferably, the first end of the first main body corresponds to the first end of the second main body. This gives the advantage that both main bodies extend from the first end to the second end of the first main body. Thus, the second end of the first main body also corresponds to the second end of the second main body.

In a preferred embodiment of the present invention, the first main body having the at least substantially u-shaped cross section and the second main body having the at least substantially u-shaped cross section are arranged adjacent to each other, wherein lateral openings of the at least substantially u-shaped cross sections facing each other.

The u-shaped cross-sections leave openings at the sides. The first main body and the second main body are placed next to each other in such a way that the side openings close each other. This results in a body that is closed to the outside and has a particularly high rigidity.

Advantageously, the first main body and the second main body are welded to each other such that the at least substantially u-shaped cross sections of the first main body and the second main body define a closed shell cross section.

This creates a particularly strong connection between the first main body and the second main body. The two u-shaped cross sections together form a closed shell cross section and thus gain a very high degree of rigidity. For example, the first main body and the second tmain body are joined together by means of vibration welding. This joining method brings the additional advantage that the ribs of the first and second main body arranged inside the u-shaped cross section can also be directly welded together.

In a preferred embodiment of the present invention, the first main body comprises a glove box housing. On the one hand, this has the technical advantage that another important component of the cross car beam becomes an integral part. This further reduces the number of components. Another important advantage is that the integration of the glove box housing further increases the stiffness of the cross car beam. Thus, the glove box housing has a dual function.

Preferably, a wall thickness of the glove box housing facing the first main body is thicker compared to a wall thickness of the glove box housing facing a passenger compartment.

In this way, safety aspects can also be taken into account in accident situations. The thinner the wall thickness of the glove box housing, the easier it is to deform in the event of an impact by a body from the passenger compartment. This can significantly reduce the risk of injury to passengers in the passenger compartment.

According to an advantageous further development a wall thickness of the glove box housing is continuously decreasing from the first main body to the passenger compartment.

According to an advantageous embodiment, the main body comprises a steering column carrier.

This gives the advantage that another important component of the cross car beam becomes an integral part. This further reduces the number of components. Another important advantage is that the integration of the steering column carrier further increases the stiffness of the cross car beam. Thus, the steering column carrier has a dual function.

According to a further variant a cross car beam for a vehicle is proposed comprising a first main body extending in a longitudinal direction from a first end to a second end, at least an upper fixing point and a lower fixing point at the first end of the first main body, at least an upper fixing point and a lower fixing point at the second end of the first main body, wherein a first center line is running through the upper fixing point at the first end and the upper fixing point at the second end, the first main body having an at least substantially u-shaped cross section substantially following the first center line, the cross car beam is formed integrally by at least one fibre reinforced polymer.

By forming the cross car beam integrally by at least one fibre reinforced polymer the total number of components can be reduced. Nevertheless the cross car beam must be able to absorb the forces that occur. The occurring forces are transferred from the vehicle body to the cross car beam via the fixing points. The place and the number of fixing points are predefined from the body manufacturer. Likewise the occurring forces that will be transferred to the cross car beam and that determine the stiffness of the cross car beam are predefined from the body manufacturer.

This is made possible on the one hand by the substantially u-shaped cross section extending continuously in the longitudinal direction from the first end to the second end. The u-shaped cross-section is easy to produce and has a high degree of rigidity.

Due to the fact that the first center line extends through the upper fixing points and thus the u-shaped cross-section follows the center line, the upper fixing points of the first main body are substantially at the same level of the u-shaped cross section. A load application via the upper fixing points on the cross car beam can thus be directly transmitted through the u-shaped cross-section. In this way, the stiffness of the cross car beam can be increased and the lever from the load-bearing fixing points is minimised.

On the other hand, this is achieved by the fibres reinforcing the polymer. The fibres comprise glass fibres or carbon fibres whose orientation in the polymer is aligned with the force flow through the cross car beam.

According to a preferred embodiment the cross car beam is made from an injection molded fibre reinforced polymer. The advantage here is that integrally formed cross car beam can be produced completely automatically. The fibres are introduced automatically during the injection moulding process of the cross car beam and are oriented precisely depending on the force flow by means of targeted control of the injection moulding nozzles.

In a preferred embodiment of the present invention, a distance between the upper fixing point at the first end and the first center line and a distance between the upper fixing point at the second end and the first center line is less than 30 mm.

According to a preferred embodiment of the invention, the first main body comprises a first sub body arranged at the first end of the first main body extending transversal to the longitudinal direction between first end and second end.

The first sub body does not run in a longitudinal direction but in a transversal direction. This additionally increases the stiffness of the cross car beam.

Preferably, the first sub body comprises the upper fixing point and the lower fixing point. This achieves the technical advantage that a load application can be better transmitted from the fixing points to the cross car beam.

To increase the stiffness of the first sub body and thus to increase the stiffness of the entire cross car beam the first sub body has an at least substantially u-shaped cross section. According to an advantageous further development of the invention the u-shaped cross section substantially following the transversal direction.

In a preferred embodiment of the present invention, the first main body comprises a second sub body arranged at the second end of the first main body extending transversal to the longitudinal direction between first end and second end.

The second sub body does not run in a longitudinal direction but in a transversal direction. This additionally increases the stiffness of the cross car beam.

Preferably, the second sub body comprises the upper fixing point and the lower fixing point.

This brings with it the advantage that a load application can be better transmitted from the fixing points to the cross car beam.

To further increase the stiffness of the second sub body and thus to increase the stiffness of the entire cross car beam, the second sub body has an at least substantially u-shaped cross section.

Comparable with the first sub body it is an advantageous further development of the invention in combination with the second sub body wherein the u-shaped cross section substantially follows the transversal direction.

According to a preferred embodiment of the invention, the u-shaped cross sections comprise inner ribs reinforcing the first main body. The inner ribs are arranged inside the u-shaped cross section and connect the opposite legs of the u-shaped cross section. To further strengthen the beam the ribs cross over each other. Thus, the stiffness of the cross car beam can be maximised with a low material input.

In a preferred embodiment of the present invention, the first sub body and the second sub comprise inner ribs respectively reinforcing the first sub body and the second sub body.

This allows the identical advantageous effect on the stiffness on both the first sub body and the second sub body. In total the stiffness of the complete cross car beam is increased.

All features and advantages disclosed herein can be combined with each other in any combination as long as they fall under then scope of the appended claims.

### BRIEF DESCRIPTION OF THE DRAWINGS

Further advantages and developments as well as features of the present invention are revealed by the following detailed description of an exemplary embodiment made with reference to the accompanying drawings.

Figs. 1 to 8 illustrate an exemplary embodiment of a cross car beam according to the present invention in different views and level of detail. In this regard,
- Fig. 1: shows a view of a cross car beam;
- Fig. 2A: shows two facing u-shaped cross sections;
- Fig. 2B: shows two welded u-shaped cross sections;
- Fig. 3: shows a view of a first main body and a second main body;
- Fig. 4: shows a view of a further cross car beam;
- Fig. 5: shows a cross section view of a cross car beam;
- Fig. 6: shows a detailed view the excerpt of Fig. 5;
- Fig. 7: shows a crash pad in a front view; and
- Fig. 8: shows a further cross section view of a cross car beam.

Consequently, in the different views, identical parts are designated by identical reference numerals.

### DESCRIPTION OF AN EXEMPLARY EMBODIMENT

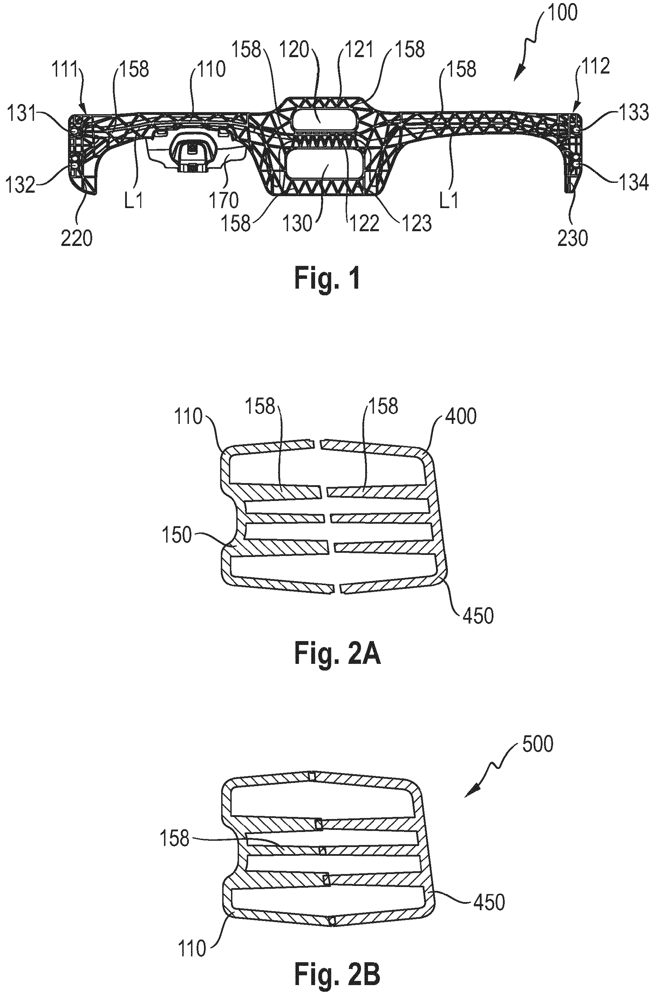

Fig. 1 shows a view of a cross car beam 100 from a rear side view. The cross car beam 100 comprises a first main body 110 extending from a first end 111 to a second end 112. From the first end 111 to the second end 112 extends a longitudinal direction. The longitudinal direction describes the connection from a left hand door to a right hand door of a vehicle in whose passenger compartment the cross car beam 100 is provided for.

For reasons of rigidity, the cross car beam 100 comprises an at least substantially u-shaped cross section 150 (not shown). The u-shaped cross section follows the longitudinal direction of the first main body 110 almost from the first end 111 to the second end 112. The space between the legs of the u-shaped cross section comprises inner ribs 158 which are used to further increase the stiffness of the cross car beam 100.

The complete cross car beam 100 from the first end 111 to the second end 112 including the ribs 158 is formed integrally by at least one fibre reinforced polymer.

In a middle section the cross car beam 100 comprises a first opening 120 and a second opening 130. The first opening 120 and the second opening 130 divide the first main body 110 into an upper part 121 a middle part 122 and a lower part 123. Also the upper part 121, the middle part 122 and the lower part 123 have each a u-shaped cross section 150 for reasons of rigidity. Additionally each u-shaped cross section 150 comprises inner ribs 158 to further increase the stiffness of the cross car beam 100.

At the first end 111 of the cross car beam 100 a first sub body 220 is arranged in a transversal direction. Also the first sub body 220 is having an at least substantially u-shaped cross section 250, wherein an upper fixing point 131 and a lower fixing point 132 is placed within the first sub body 220. For further increase of the stiffness the first sub body 220 comprises inner ribs 158.

At the second end 112 of the cross car beam 100 a second sub body 230 is arranged in a transversal direction. Also the second sub body 230 is having an at least substantially u-shaped cross section 250, wherein an upper fixing point 133 and a lower fixing point 134 is placed within the second sub body 230. For further increase of the stiffness the second sub body 230 comprises inner ribs 158.

The cross car beam 100 comprises a first center line L1 that is running through the upper fixing point 131 at the first end 111 and the upper fixing point 133 at the second end 112. The first center line L1 runs through the middle part 122 to ensure a continuous progression of an at least substantially u-shaped cross section 150 from the first end 111 to the second end 112.

Between the first end 111 and the middle section comprising the upper part 121, the middle part 122 and the lower part 123 a steering column carrier 170 is provided at the cross car beam 100. Again the complete cross car beam 100 from the first end 111 to the second end 112 including the first sub body 220, the second sub body 230, steering column carrier 170 and the middle section comprising the upper part 121, the middle part 122 and the lower part 123 is formed integrally by at least one fibre reinforced polymer.

Fig. 2A shows two facing u-shaped cross sections 150, 450. The respective open side of each u-shaped cross section 150, 450 is directed towards each other. The cross sections 150, 450 differ slightly and both include inner ribs 158 for further increase of the stiffness.

Fig. 2B shows two welded u-shaped cross sections 150, 450. The cross sections 150, 450 and additionally the inner ribs 158 are welded with each other. In this welded state, the two cross sections define a common shell cross section 500.

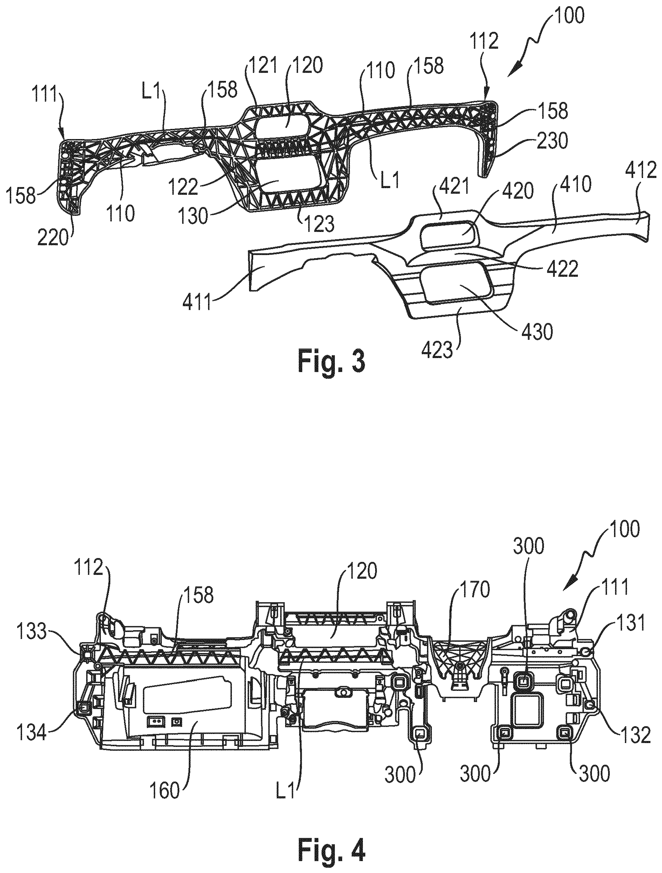

Fig. 3 shows a view of a first main body 110 and a second main body 410 from a rear side view.

The first main body 110 corresponds identically to the main body 110 described in figure 1. A repeated description of identical features is thus dispensed with. In the following the description is therefore restricted to the second main body 410.

The second main body 410 is designed to be aligned with the first main body 110. For example, the first main body 110 and the second main body 410 are welded together according to the cross sectional view shown in Figure 2B to increase the stiffness of the cross car beam 100.

The second main body 410 also has an at least substantially u-shaped cross section 450 (not shown) and is arranged adjacent to the first main body 110. The lateral openings of the u-shaped cross sections 150, 450 are facing each other.

Further the second main body 410 also extends from a first end 411 to a second end 412 and substantially follows the longitudinal direction.

As with the first main body 110 the at least substantially u-shaped cross section 450 of the second main body 410 substantially follows the mentioned longitudinal direction.

In a middle section the second main body comprises a first opening 420 and a second opening 430. The first opening 420 and the second opening 430 divide the second main body 410 into an upper part 421 a middle part 422 and a lower part 423. Also the upper part 421, the middle part 422 and the lower part 423 have each a u-shaped cross section 450 for reasons of rigidity. Additionally each u-shaped cross section 450 comprises inner ribs 158 to further increase the stiffness of the second main body 410.

In a condition in which the first main body 110 and the second main body 410 are welded together, the first openings 120, 420 and the second openings 130, 430 are aligned to correspond to each other.

In contrast to the first main body 110, the second main body 410 does not have any upper fixing points 131, 133 and lower fixing points 132, 134.

The complete second main body 410 is formed integrally by at least one fibre reinforced polymer.

Fig. 4 shows a view of a further cross car beam 100 from a front side view.

The cross car beam 100 comprises the first main body 110 and corresponds almost identically to the main body 110 described in figure 1. A repeated description of identical features is thus dispensed with. In the following the description is therefore restricted to the additional features shown in figure 4.

The first main body 110 extends from a first end 111 to a second end 112 in a longitudinal direction. The longitudinal direction describes the connection from a left hand door to a right hand door of a vehicle in whose passenger compartment the cross car beam 100 is provided for. For reasons of rigidity, the first main body 110 comprises an at least substantially u-shaped cross section 150 following the longitudinal direction of the first main body 110 almost from the first end 111 to the second end 112. Further stiffness is reached by inner ribs 158 inside the u-shaped cross section 150.

Between the first end 111 and the steering column carrier 170 several collapsible guiding elements 300 are show. Adjacent to the second end 112 a glove box housing 160 is attached to the first main body 110. Again the complete cross car beam 100 from the first end 111 to the second end 112 including the first sub body 220, the second sub body 230, the steering column carrier 170 and the glove box housing 160 is formed integrally by at least one fibre reinforced polymer.

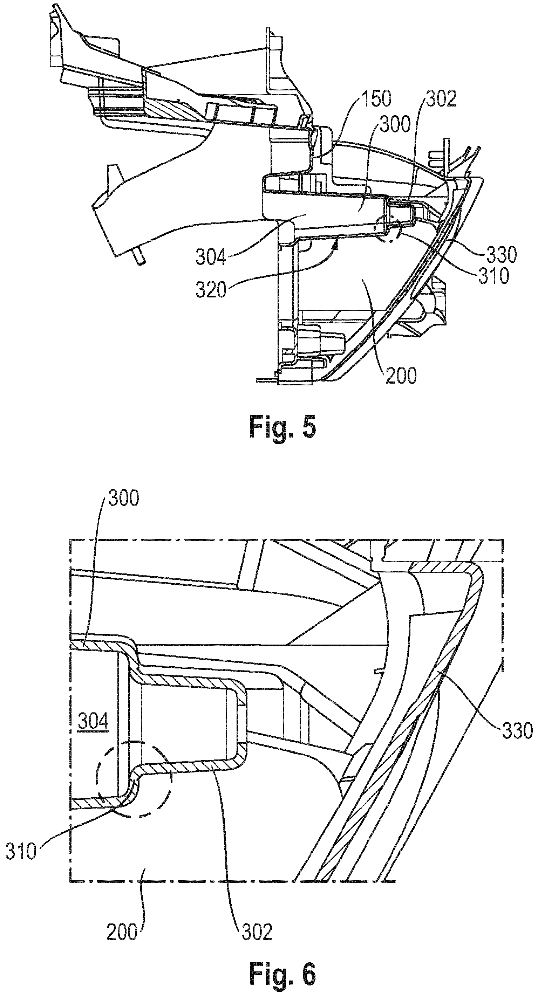

Fig. 5 shows a cross section view of a cross car beam 100.

The cross car beam 100 comprises a deformable crash pad 200 that is adapted to absorb impact energy. Inside the crash pad 200 there is a foam core to distribute the force acting on the crash pad 200. The crash pad 200 is placed on the first main body 110 and is covered by a cover element 330. The cover element 330 is facing to the passenger compartment such that an impact from a passenger sitting in the passenger compartment on the cover element 330 can be transferred to the crash pad 200.

Additionally a guiding element 300 is placed parallel to the crash pad 200 and is adapted to guide the crash pad 200 during deformation by the cover element 330. The cover element 330 also covers the collapsible guiding element 300 such that the cover element 330 can collapse the collapsible guiding element 300 in the event of an energy impact.

To collapse the collapsible guiding element 300 a threshold of a predetermined breaking point 310 has to be exceeded.

So if the impact on the cover element 330 is big enough, the crash pad 200 is deformed first. If the impact energy absorbed is not sufficient, the cover element 330 comes into contact with the impact unit 302 of the guiding element 300. If a threshold is exceeded, a predetermined breaking point 310 fails and the impact unit 302 is displaced by the cover element 330 into an internal space 304. The predetermined breaking point 310 is placed between the collapsible guiding element 300 and the impact unit 302. In a cross section view the predetermined breaking point 310 comprises a reduced cross section and extends into a peripheral direction of the guiding element 300. Thus, the predetermined breaking point is arranged in a ring around the guiding element 300.

As a consequence, the crash pad 200 can be further deformed to absorb impact energy. During the entire deformation process, a guiding surface 320 on the lateral outer shaft of the guiding element 300 ensures that the deformation of the crash pad 200 takes place in an orderly and straight line.

Above the guiding element 300 is the at least substantially u-shaped cross section 150 of the first main body 110 extending in the longitudinal direction.

Again the complete cross car beam 100 comprising the u-shaped cross section 150 extending from the first end 111 to the second end 112 including the guiding element 300 and the impact unit 302 is formed integrally by at least one fibre reinforced polymer.

Fig. 6 shows a detailed view the excerpt of Fig. 5.

The deformable crash pad 200 is located between first main body 110 and cover element 330. Additionally the predetermined breaking point 310 is located between the collapsible guiding element 300 and the impact unit 302. The predetermined breaking point 310 is placed between the collapsible guiding element 300 and the impact unit 302. In a cross section view the predetermined breaking point 310 comprises a reduced cross section and extends into a peripheral direction of the guiding element 300.

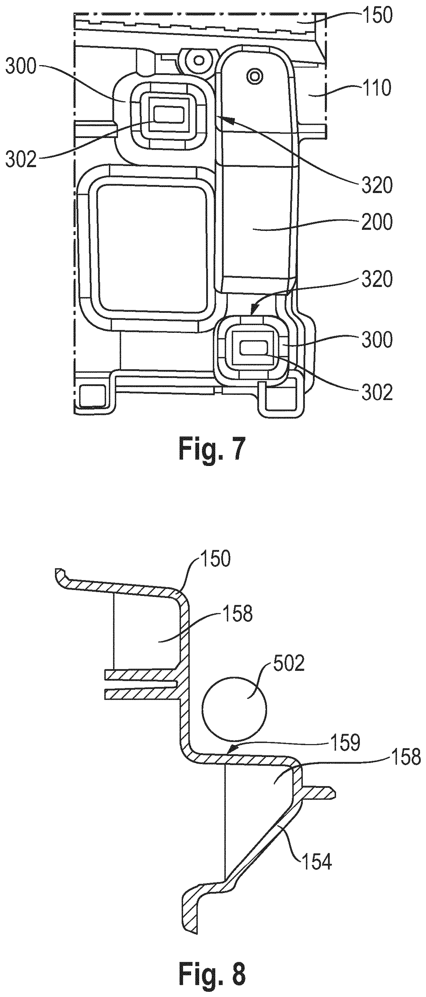

Fig. 7 shows a crash pad 200 in a front view. Next to the crash pad 200 is a first collapsible guiding element 300 including the impact unit 302 and the predetermined breaking point 310. A guiding surface 320 is placed at the lateral outer side of the guiding element 300 facing the crash pad 200 to ensure a guided deformation of the crash pad 200. Below the crash pad 200 is a second collapsible guiding element 300 including the impact unit 302 and the predetermined breaking point 310. Also the second collapsible guiding element 300 comprises a guiding surface 320 that is placed at a lateral outer side of the second guiding element 300 facing the crash pad 200.

Fig. 8 shows a further cross section view of a cross car beam 100.

The first main body 110 has an at least substantially u-shaped cross section 150 and an additional cross section 154. Both u-shaped cross section 150 and an additional cross section 154 are following substantially parallel to each other and follow the longitudinal direction. Within the u-shaped cross section 150 and an additional cross section 154 there are reinforcing ribs 158.

The additional u-shaped cross-section 154 is arranged offset, whereby the u-shaped cross section 150 and the additional cross section 154 together define a stepped cross section structure. The resulting protrusion area 159 is suitable for laying cable harnesses 502.

Although the present invention has been explained in detail with reference to a purely exemplary embodiment, it goes without saying that the present invention is not limited to this embodiment. The scope of the invention is defined by the appended claims.

### REFERENCE LIST

- 100: cross car beam
- 110: first main body
- 111: first end
- 112: second end

- 120: first opening
- 121: upper part
- 122: middle part
- 123: lower part
- 130: second opening

- 131,133: upper fixing point
- 132, 134: lower fixing point

- 150, 250, 450: u-shaped cross section
- 154: additional cross section
- 158: ribs
- 159: protrusion area

- 160: glove box housing

- 170: steering column carrier

- 200: crash pad
- 220: first sub body
- 230: second sub body

- 300: guiding element
- 302: impact unit
- 304: internal space
- 310: predetermined breaking point
- 320: guiding surface
- 330: cover element

- 410: second main body
- 411: first end
- 412: second end
- 420: first opening
- 421: upper part
- 422: middle part
- 423: lower part
- 430: second opening

- 500: shell cross section
- 502: cable harnesses

- L1: first center line
- L2: second center line

## Claims

1. A cross car beam (100) for a vehicle comprising:
a first main body (110) extending in a longitudinal direction from a first end (111) to a second end (112),
at least one deformable crash pad (200) adapted to absorb impact energy,
at least one collapsible guiding element (300) placed adjacent to the crash pad (200),
wherein the collapsible guiding element (300) comprises a guiding surface (320) adapted to guide the crash pad (200) during deformation, and
the cross car beam (100) is formed integrally by at least one fibre reinforced polymer.

2. The cross car beam (100) of claim 1, wherein the cross car beam (100) is made from an injection molded fibre reinforced polymer.

3. The cross car beam (100) of claim 1 or 2, wherein the crash pad (200) comprises a foam core.

4. The cross car beam (100) of any one of the preceding claims, wherein the crash pad (200) is covered by a cover element (330) facing to a passenger compartment such that an impact from the passenger compartment on the cover element (330) is transferred to the crash pad (200).

5. The cross car beam (100) of any one of the preceding claims, wherein the collapsible guiding element (300) is covered by a cover element (330) facing to the passenger compartment such that the impact energy from the passenger compartment on the cover element (330) is transferred to the collapsible guiding element (300).

6. The cross car beam (100) of any one of the preceding claims, the collapsible guiding element (300) comprising a predetermined breaking point (310).

7. The cross car beam (100) of any one of the preceding claims, the collapsible guiding element (300) comprising an impact unit (302) adapted to collapse relative to the collapsible guiding element (300) if an impact energy from the passenger compartment on the cover element (330) is transferred to the impact unit (302).

8. The cross car beam (100) of claim 7, wherein the impact unit (302) is adapted to collapse into an internal space (304) of the collapsible guiding element (300).

9. The cross car beam (100) of claim 7 or 8 when dependent on claim 6, wherein the predetermined breaking point (310) is placed between the collapsible guiding element (300) and the impact unit (302).

10. The cross car beam (100) of claim 6 or of any one of the preceding claims 7 to 9 when dependent on claim 6, wherein the predetermined breaking point (310) comprises a reduced cross section.

11. The cross car beam (100) of claim 10, wherein the predetermined breaking point (310) extends into a peripheral direction of the guiding element (300).

12. The cross car beam (100) of any one of the preceding claims, comprising a first collapsible guiding element (300) placed adjacent to the crash pad (200) and a second collapsible guiding element (301) placed adjacent to the crash pad (200), wherein the first collapsible guiding element (300) is placed at a different side of the crash pad (200) compared to the second collapsible guiding element (300).

## Patentansprüche

1. Querträger (100) für ein Fahrzeug, umfassend:
- einen ersten Hauptkörper (110), der sich in einer Längsrichtung von einem ersten Ende (111) zu einem zweiten Ende (112) erstreckt,
- mindestens ein verformbares Crash-Pad (200), das dazu ausgebildet ist, Aufprallenergie zu absorbieren,
- mindestens ein kollabierbares Führungselement (300), das benachbart zu dem Crash-Pad (200) angeordnet ist,a
wobei das kollabierbare Führungselement (300) eine Führungsfläche (320) umfasst, die dazu ausgebildet ist, das Crash-Pad (200) während der Verformung zu führen, und wobei der Querträger (100) einstückig aus mindestens einem faserverstärkten Polymer ausgebildet ist.

2. Querträger (100) nach Anspruch 1, wobei der Querträger (100) aus einem spritzgegossenen faserverstärkten Polymer hergestellt ist.

3. Querträger (100) nach Anspruch 1 oder 2, wobei das Crash-Pad (200) einen Schaumstoffkern umfasst.

4. Querträger (100) nach einem der vorhergehenden Ansprüche, wobei das Crash-Pad (200) durch ein dem Fahrgastraum zugewandtes Abdeckungselement (330) abgedeckt ist, sodass ein Aufprall aus dem Fahrgastraum auf das Abdeckungselement (330) auf das Crash-Pad (200) übertragen wird.

5. Querträger (100) nach einem der vorhergehenden Ansprüche, wobei das kollabierbare Führungselement (300) durch ein dem Fahrgastraum zugewandtes Abdeckungselement (330) abgedeckt ist, sodass die Aufprallenergie aus dem Fahrgastraum auf das Abdeckungselement (330) auf das kollabierbare Führungselement (300) übertragen wird.

6. Querträger (100) nach einem der vorhergehenden Ansprüche, wobei das kollabierbare Führungselement (300) eine Sollbruchstelle (310) umfasst.

7. Querträger (100) nach einem der vorhergehenden Ansprüche, wobei das kollabierbare Führungselement (300) eine Aufpralleinheit (302) umfasst, die dazu ausgebildet ist, relativ zu dem kollabierbaren Führungselement (300) zu kollabieren.

8. Querträger (100) nach Anspruch 7, wobei die Aufpralleinheit (302) dazu ausgebildet ist, in einen Innenraum (304) des kollabierbaren Führungselements (300) einzukollabieren.

9. Querträger (100) nach Anspruch 7 oder 8 in Rückbeziehung auf Anspruch 6, wobei die Sollbruchstelle (310) zwischen dem kollabierbaren Führungselement (300) und der Aufpralleinheit (302) angeordnet ist.

10. Querträger (100) nach Anspruch 6 oder einem der Ansprüche 7 bis 9 in Rückbeziehung auf Anspruch 6, wobei die Sollbruchstelle (310) einen reduzierten Querschnitt aufweist.

11. Querträger (100) nach Anspruch 10, wobei sich die Sollbruchstelle (310) in Umfangsrichtung des Führungselements (300) erstreckt.

12. Querträger (100) nach einem der vorhergehenden Ansprüche, umfassend ein erstes kollabierbares Führungselement (300) und ein zweites kollabierbares Führungselement (301), die auf unterschiedlichen Seiten des Crash-Pads (200) angeordnet sind.

## Revendications

1. Traverse de tableau de bord (100) pour un véhicule, comprenant: un premier corps principal (110), au moins un tampon d'absorption de choc (200) et au moins un élément de guidage déformable par écrasement (300), l'élément comprenant une surface de guidage (320), la traverse étant réalisée d'une seule pièce en au moins un polymère renforcé de fibres.

2. Traverse de tableau de bord (100) selon la revendication 1, réalisée à partir d'un polymère renforcé de fibres moulé par injection.

3. Traverse de tableau de bord (100) selon la revendication 1 ou 2, dans laquelle le tampon d'absorption de choc (200) comprend une âme en mousse.

4. Traverse de tableau de bord (100) selon l'une quelconque des revendications précédentes, dans laquelle le tampon d'absorption de choc (200) est recouvert par un élément de recouvrement (330) orienté vers l'habitacle.

5. Traverse de tableau de bord (100) selon l'une quelconque des revendications précédentes, dans laquelle l'élément de guidage déformable par écrasement (300) est recouvert par un élément de recouvrement (330) orienté vers l'habitacle.

6. Traverse de tableau de bord (100) selon l'une quelconque des revendications précédentes, dans laquelle l'élément de guidage déformable par écrasement (300) comprend un point de rupture prédéterminé (310).

7. Traverse de tableau de bord (100) selon l'une quelconque des revendications précédentes, comprenant une unité d'impact (302).

8. Traverse de tableau de bord (100) selon la revendication 7, dans laquelle l'unité d'impact (302) est configurée pour s'écraser dans un espace intérieur (304).

9. Traverse de tableau de bord (100) selon la revendication 7 ou 8 en dépendance de la revendication 6.

10. Traverse de tableau de bord (100) selon la revendication 6 ou l'une quelconque des revendications 7 à 9 dépendant de la revendication 6.

11. Traverse de tableau de bord (100) selon la revendication 10, dans laquelle le point de rupture prédéterminé (310) s'étend dans une direction périphérique.

12. Traverse de tableau de bord (100) selon l'une quelconque des revendications précédentes, comprenant un premier élément (300) et un second élément (301) disposés de part et d'autre du tampon d'absorption de choc (200).
